# FASCICULE DE BREVET EUROPEEN

(11) **EP 2 720 064 B1**
(45) Date de publication et mention de la délivrance du brevet: **04.04.2018**
(21) Numéro de dépôt: 13188241.7
(22) Date de dépôt: 11.10.2013
(51) Int. Cl.: G01S 1/22, H04B 7/185, H04B 7/212, H04L 27/26, H04W 56/00

(54) **Système de synchronisation d'un dispositif de pointage satellitaire.**
Synchronisierungssystem einer Vorrichtung zur Satellitenausrichtung
System for synchronising a satellite pointing device

(30) Priorité: 12.10.2012 FR 1202728
(43) Date de publication de la demande: 16.04.2014
(73) Titulaire: THALES, 92400 Courbevoie (FR)
(72) Inventeur: Touret, Marc, 92622 Gennevilliers Cedex (FR)
(74) Mandataire: Priori, Enrico

(56) Documents cités:
- EP-A2- 2 693 660
- US-B1- 6 625 174
- US-B1- 6 870 819

## Description

La présente invention concerne un procédé permettant la synchronisation pour un dispositif de pointage d'un terminal satellitaire avec un satellite ou une station terrestre. L'ensemble de ces éléments appartenant à un même système de transmission satellitaire.

Il est connu dans l'état de la technique des procédés de pointage satellitaire utilisant l'émission d'un signal de synchronisation basé sur une séquence pseudo aléatoire modulée. Cette modulation peut par exemple être réalisée en utilisant une modulation de phase à deux états (connue aussi dans l'état dans la technique sous le nom de BPSK pour Binary Phase Shift Keing en Anglais). Ce signal de synchronisation, est aussi connu dans l'état de la technique sous le nom de balise.

Il est connu du brevet US 6.870.819 B1 un procédé de synchronisation des horloges entre un satellite et une station terrestre, utilisant à cet effet une unique fréquence pour les voies montantes et descendantes.

Il est également connu du brevet US 6.625.174 B1, un procédé de transmission selon une modulation multiporteuse, dans lequel les sous porteuses allouées varient au cours de la transmission de manière à améliorer les conditions de propagation du signal, au sein d'un même canal.

Cependant, dans le cas où une source d'interférence est présente, cette interférence risque de dégrader les performances de synchronisation avec un signal de synchronisation connu sous le nom de signal balise ou balise dans l'état de la technique. Il est connu aussi pour désigner ce processus d'utiliser l'expression acquisition de la balise. Il n'est alors plus possible pour un terminal satellitaire ou une station au sol de pointer correctement son antenne vers le satellite et donc le terminal satellitaire ou la station au sol ne peuvent plus échanger d'informations avec les autres terminaux satellitaire ou stations au sol. Il est connu pour limiter l'influence de ces interférences d'augmenter la puissance d'émission du signal de synchronisation ou signal balise. Cependant, cette augmentation de la puissance d'émission n'est pas toujours compatible avec la puissance disponible dans le satellite ou dans la station terrestre. De plus cette augmentation de la puissance peut-être interdite par la législation. Il est aussi connu de la demande de brevet Européenne EP 2.693.660 A2 un procédé d'émission d'un signal de synchornisation dans lequel le même signal de synchronisation est transmis sur une pluralité de fréquences, ce qui présente l'inconvénient d'augmenter le niveau de puissance requis pour les émissions du satellite.

De plus, dans le cas de l'utilisation d'antennes à balayage électronique l'angle de pointage de l'antenne dépend entre autres de la fréquence utilisée (émission ou réception). Ainsi, si l'antenne à balayage est pointée suivant un angle A pour recevoir un signal à une fréquence F1 (signal de synchronisation ou signal balise), la réception simultanée d'un signal à la fréquence F2 (signal utile) implique un angle de dépointage différent de A. L'écart angulaire en réception étant proportionnel à l'angle de dépointage et à l'écart relatif en fréquence, le niveau reçu sur F2 sera d'autant plus affaibli que les deux fréquences F1 et F2 sont différentes et que l'angle de dépointage est élevé. Par exemple, en bande Ka l'angle de dépointage peut être supérieur à 1 ° ce qui implique une perte de bilan de liaison supérieure à 0.2dB.

La présente invention vise donc à remédier à ces problèmes en proposant un procédé et un système de synchronisation pouvant fonctionner même en présence d'une ou plusieurs sources d'interférences et pour lequel la puissance d'émission n'a pas besoin d'être augmentée.

La présente invention propose un système de synchronisation d'un dispositif de pointage satellitaire utilisant l'émission d'un signal de synchronisation dans un ensemble d'intervalles temporels contigus. Le système comporte des premiers moyens de sélection d'au moins deux intervalles temporels appartenant à l'ensemble, des deuxièmes moyens de sélection d'au moins deux fréquences d'émission distinctes, chaque fréquence d'émission étant associée à un desdits intervalles temporels sélectionnés. Le système comporte également des moyens de modulation du signal de synchronisation dans les intervalles temporels sélectionnés en utilisant la fréquence d'émission respectivement associée à l'intervalle temporel et des moyens de démodulation du signal de synchronisation reçu. Enfin, les moyens de modulation sont intégrés dans une station au sol et les moyens de démodulation sont intégrés dans un terminal satellitaire.

Le procédé permet donc la synchronisation d'un dispositif de pointage satellitaire par l'émission d'un signal de synchronisation occupant une plus large bande d'étalement des fréquences que celle occupée par d'autres procédés de synchronisation. En effet, ce procédé permet d'utiliser successivement plusieurs fréquences d'émission différentes. Ceci permet de rendre la réception de ce signal de synchronisation résistant aux interférences. Cette résistance va dépendre du nombre de fréquences d'émission qui sont utilisées pour l'émission du signal de synchronisation. Ainsi, si la bande du signal utile est de b Hz et que la bande de saut est de B Hz alors on dit que la résistance (ou gain de traitement) est de 10.log10(B/b) dB. Dans le cas d'un signal de synchronisation modulé, ayant une occupation spectrale de 10kHz et sautant dans une bande de 1MHz, le gain de traitement est de 10.log10(1e6/1e4) = 20dB. De plus, le procédé permet d'obtenir un signal de synchronisation dont la démodulation est difficile pour un système ne connaissant pas les fréquences utilisées pour émettre ce signal.

Selon une caractéristique technique, les premiers moyens de sélection sont adaptés en outre pour sélectionner au moins deux intervalles temporels consécutifs, les deuxièmes moyens de sélection sont adaptés pour sélectionner deux fréquence d'émission distinctes, chaque fréquence d'émission étant associée à un desdits intervalles temporels consécutifs. De plus les moyens de modulation sont adaptés pour émettre le signal de synchronisation dans les intervalles temporels consécutifs et en utilisant les deux fréquences d'émission associées aux intervalles temporels consécutifs.

Cette caractéristique technique permet de maximiser la durée d'émission du signal de synchronisation.

Selon une caractéristique technique les moyens de modulation sont adaptés en outre pour la modulation de données dans au moins un intervalle temporel non sélectionné par les premiers moyens de sélection et/ou en utilisant une fréquence non sélectionnée par les deuxièmes moyens de sélection.

Cette caractéristique technique permet d'optimiser l'utilisation des ressources utilisées pour l'émission du signal de synchronisation et d'utiliser les intervalles temporels non utilisés pour la synchronisation pour envoyer des données. Ceci permet donc d'augmenter les performances globales du système utilisant ce procédé de synchronisation et le débit atteignable. De plus le signal de synchronisation étant mélangé aux autres données, il est plus difficilement détectable par un système cherchant à brouiller ou à rejouer le signal de synchronisation.

Avantageusement les moyens de modulation sont intégrés dans au moins un satellite.

Selon une caractéristique technique le terminal satellitaire et/ou la station terrestre comportent en outre des moyens de synchronisation temporelle grossière.

La synchronisation grossière est réalisée à partir d'une estimation de :
- la position du satellite
   ∘ Ceci permet de pointer l'antenne vers le satellite avec une précision de quelques degrés. En effet, il faut que l'antenne reçoive une partie de l'énergie du signal de la balise satellite.
- L'heure et le temps de transit entre le terminal et le satellite
   ∘ Puisque la balise saute en fréquence à rythme donné il faut à connaitre précisément le temps qui a servi à déterminer la fréquence d'émission du signal de synchronisation.

La synchronisation grossière consiste à détecter l'énergie du signal de synchronisation. La synchronisation fine consiste à maximiser le pic d'énergie correspondant à l'optimal en terme de position de pointage.

Cette caractéristique technique permet aux différents éléments du système d'avoir entre eux une synchronisation grossière. Ceci permet de détecter le signal de synchronisation de manière plus rapide. En effet, si les éléments du système sont synchronisés de manière grossière, ils peuvent savoir la fréquence qui est utilisée pour envoyer le signal de synchronisation dans un intervalle temporel donné. Si les éléments ne sont pas synchronisés de manière grossière, ils doivent faire plusieurs hypothèses sur la possible fréquence utilisée pour l'émission du signal de synchronisation dans un intervalle temporel donné.

Avantageusement le système comporte un dispositif de détermination du rapport signal sur bruit d'au moins un desdits intervalles temporels, de plus les premiers moyens de sélection sont adaptés pour sélectionner les intervalles temporels dont le rapport signal sur bruit dépasse un seuil.

Avantageusement les moyens de modulation et d'émission 103 sont adaptés pour générer le signal de synchronisation en émettant des bits générés par un générateur pseudo-aléatoire une graine dudit générateur est déterminée à partir de l'heure du système.

Avantageusement les moyens de modulation et d'émission sont adaptés pour utiliser une modulation identique pour la modulation dudit signal de synchronisation et desdits données.

Avantageusement les moyens de modulation et d'émission sont adaptés pour l'utilisation d'une modulation à étalement de spectre.

L'invention sera mieux comprise et d'autres avantages apparaîtront à la lecture de la description détaillée faite à titre d'exemple non limitatif à l'aide des figures suivantes parmi lesquelles :
- la figure 1 présente le système selon un premier aspect de l'invention
- la figure 2 présente le système selon un deuxième aspect de l'invention
- la figure 3 présente le système selon un troisième aspect de l'invention

Dans le cadre d'un système satellitaire le processus de synchronisation entre le dispositif de pointage du satellite et d'un terminal satellitaire ou entre le dispositif de pointage d'un terminal satellitaire et d'une station au sol est un processus primordial. En effet l'absence de synchronisation, entre les différents éléments d'un système satellitaire, empêche l'envoi de données entre les différents terminaux satellitaire ou entre un terminal satellitaire et une station au sol.

Le système propose donc l'envoi d'un signal de synchronisation en utilisant une fréquence d'émission variant dans le temps. L'utilisation d'une fréquence d'émission variant dans le temps permet d'augmenter artificiellement la largeur de bande d'étalement des fréquences utilisée par le processus de synchronisation. Ceci permet de rendre le procédé de synchronisation résistant aux sources d'interférences. Ainsi, si la bande du signal utile est de b Hz et que la bande de saut est de B hz alors on dit que la résistance (ou gain de traitement) est de 10.log10(B/b) dB. Dans le cas d'un signal de synchronisation modulé, ayant une occupation spectrale de 10kHz et sautant dans une bande de 1MHz, le gain de traitement est de 10.log10(1e6/1e4) = 20dB.

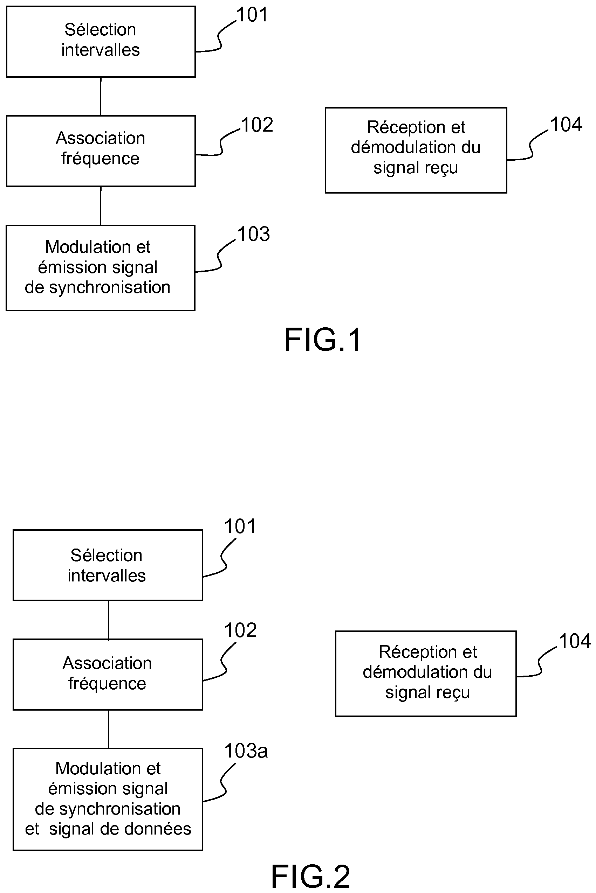

Le système de synchronisation satellitaire, tel que présenté figure 1 utilise un ensemble d'intervalles temporels contigus. Ce système comporte un premier dispositif 101 de sélection d'au moins deux intervalles temporels appartenant à l'ensemble. Le système comporte aussi un deuxième dispositif 102 de sélection et d'association de deux fréquences d'émission aux deux intervalles temporels sélectionnés. Ensuite, le système comporte un dispositif de modulation et d'émission 103 du signal de synchronisation dans l'intervalle temporel sélectionné et en utilisant la fréquence d'émission associée à l'intervalle temporel. Enfin, le système comporte un dispositif de réception et démodulation 104 du signal reçu.

Le dispositif de modulation est généralement intégré à une station au sol mais il peut parfois être également intégré dans le satellite directement. Le dispositif de réception et démodulation est quant à lui intégré dans le terminal satellitaire.

Il est aussi possible que le premier dispositif 101 de sélection soit adapté pour sélectionner deux intervalles temporels consécutifs. Le deuxième dispositif 102 de sélection et d'association est alors adapté pour respectivement associer deux fréquences d'émission aux deux intervalles temporels consécutifs. Enfin le dispositif 103 de modulation et d'émission est adapté pour émettre le signal de synchronisation dans les intervalles temporels consécutifs et en utilisant la fréquence d'émission associée à ces intervalles temporels consécutifs.

Dans le système tel que présenté figure 2, le dispositif de modulation 103 a est adopté pour l'émission de données dans des intervalles temporels qui ne sont pas utilisés pour l'émission du signal de synchronisation. Cette caractéristique technique permet de limiter les ressources utilisées pour l'émission du signal de synchronisation et donc d'augmenter les performances globales du système utilisant ce procédé de synchronisation. De plus, le signal de synchronisation étant mélangé aux autres données, il est quasiment indétectable et donc les moyens de rejeux sont difficiles à mettre en oeuvre.

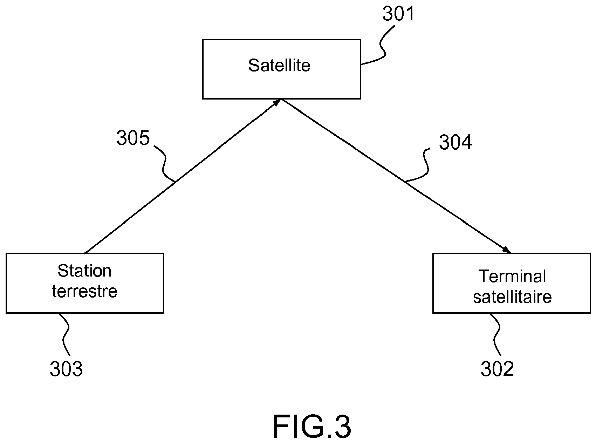

La figure 3 présente le système satellitaire mettant en oeuvre le dispositif de synchronisation. Ce système comporte un satellite 301, un terminal satellitaire 302 et une station au sol 303. La génération du signal de synchronisation est effectuée de deux manières différentes. Dans la première, le satellite génère le signal de synchronisation et ce signal est ensuite envoyé via le lien 304 vers le terminal satellitaire. Dans la deuxième, la station terrestre génère le signal de synchronisation. Ensuite, la station terrestre envoie ce signal au satellite via le lien 305, et ce dernier réfléchit ce signal vers le terminal satellitaire via le lien 304.
De plus, il est possible d'ajouter dans la station terrestre et/ou le terminal satellitaire un dispositif de synchronisation temporelle grossière. Ce dispositif de synchronisation temporelle grossière est par exemple un système de localisation satellitaire (par exemple le système GPS pour Global Positioning System ou Galileo). En effet, les signaux envoyés par ces systèmes de localisation satellitaire fournissent une indication du temps et de la position que les différents éléments du système satellitaire peuvent utiliser pour estimer l'heure et le temps de transit entre la station terrestre et le terminal. L'ajout de ce dispositif permet de réduire le temps nécessaire à la synchronisation ce qui est particulièrement intéressant pour des systèmes dont le terminal satellitaire est mobile. Ces systèmes sont aussi connus sous le nom de système OTM pour On The Move en anglais.

Dans un mode de réalisation le système comporte en outre un dispositif de détermination du rapport signal sur bruit (connu aussi sous l'acronyme SNR) des différents intervalles temporels.
Le premier dispositif 101 de sélection est adapté pour sélectionner les intervalles temporels dont le rapport signal sur bruit dépasse un seuil. Ce seuil est par exemple fixé à 2dB.

Ce dispositif de détermination du SNR et le premier dispositif 101 de sélection ainsi modifié sont intégrés la station terrestre.

En d'autres termes en cas d'interférence certains intervalles temporels auront un mauvais SNR tandis que d'autres auront un bon SNR. Ainsi on cherche à faire la poursuite balise uniquement sur les bons intervalles temporels. Ainsi on cherche à maximiser le pic de SNR (plutôt que d'énergie) en intégrant sur N intervalles temporels le rapport signal à bruit des intervalles temporels dépassant une valeur de par exemple 2dB. Les intervalles temporels ayant un SNR inférieur à ce seuil ne sont pas pris en compte dans la synchronisation fine.

Dans un mode de réalisation le dispositif de modulation et d'émission 103 est adopté pour générer le signal de synchronisation en émettant des bits générés par un générateur pseudo-aléatoire. La graine de ce générateur est avantageusement déterminée en fonction de l'heure du système.

De plus le nombre de bits de synchronisation générés et modulés par intervalle temporel est déterminé pour avoir un signal de synchronisation adapté au bilan de liaison de la station terrestre la plus défavorisée du réseau

Dans un mode de réalisation le dispositif de modulation et d'émission 103 est adapter pour émettre plus fort tout en ayant une densité spectral de puissance du signal de synchronisation respectant les normes (on peut par exemple citer les normes réalisées par l'ITU ou International Telecom Union ou Union International des Télécommunications). Ceci permet en particulier d'atteindre les stations terrestres très défavorisées. En d'autres termes si on veut émettre beaucoup d'énergie dans ce signal de synchronisation il faut l'étaler en fréquence et donc moduler plus de bits de synchronisation par intervalle temporel. Cette étalement de fréquence peut par exemple être réalisée en utilisant une modulation de type CDMA (pour Code Division Multiple Access en anglais et Accès Multiple par Répartition en Code en français).

Dans un mode de réalisation la modulation utilisée pour émettre le signal de synchronisation est le même que la modulation utilisée pour émettre les signaux de données. Ceci permet en particulier de compléxifier la détection de ce signal de synchronisation par un système non habilité à recevoir le signal de synchronisation.

## Revendications

1. Système de synchronisation d'un dispositif de pointage d'une antenne d'un terminal satellitaire ou d'une station au sol vers un satellite transmettant un signal de synchronisation satellitaire dans un ensemble d'intervalles temporels contigus, le système de synchronisation comportant:
- des premiers moyens (101) de sélection d'au moins deux intervalles temporels consécutifs appartenant audit ensemble,
- des deuxièmes moyens (102) de sélection d'au moins deux fréquences d'émission distinctes, chaque fréquence d'émission étant associée à un desdits intervalles temporels sélectionnés,
le système de synchronisation étant **caractérisé en ce qu'**il comporte en outre:
- des moyens (103) de modulation dudit signal de synchronisation dans lesdits intervalles temporels sélectionnés en utilisant la fréquence d'émission respectivement associée audit intervalle temporel, lesdits moyens de modulation étant intégrés dans une station au sol,
- des moyens (104) de démodulation du signal de synchronisation reçu, lesdits moyens de démodulation étant intégrés dans un terminal satellitaire.

2. Système de synchronisation selon la revendication 1 dans lequel lesdits premiers moyens (101) de sélection sont adaptés en outre pour sélectionner au moins deux intervalles temporels consécutifs, lesdits deuxièmes moyens (102) de sélection sont adaptés pour sélectionner deux fréquence d'émission distinctes, chaque fréquence d'émission étant associée à un desdits intervalles temporels consécutifs et lesdits moyens (103) de modulation sont adaptés pour émettre ledit signal de synchronisation dans lesdits intervalles temporels consécutifs et en utilisant les deux fréquences d'émission associées auxdits intervalles temporels consécutifs.

3. Système de synchronisation selon la revendication 1 ou 2 dans lequel lesdits moyens (103) de modulation sont adaptés en outre pour la modulation de données dans au moins un intervalle temporel non sélectionné par lesdits premiers moyens (101) de sélection et/ou en utilisant une fréquence non sélectionnée par lesdits deuxièmes moyens (102) de sélection.

4. Système de synchronisation selon l'une des revendications précédentes dans lequel lesdits moyens de modulation sont intégrés dans au moins un satellite.

5. Système de synchronisation selon l'une des revendications précédentes dans lequel ledit terminal satellitaire et/ou ledit satellite et/ou ladite station terrestre comportent en outre des moyens de synchronisation temporelle grossière.

6. Système de synchronisation selon l'une des revendications précédentes comportant des dispositifs de détermination du rapport signal sur bruit d'au moins un desdits intervalles temporels,
de plus lesdits premiers moyens (101) de sélection sont adaptés pour sélectionner les intervalles temporels dont le rapport signal sur bruit dépasse un seuil.

7. Système de synchronisation selon l'une des revendications précédentes dans lequel lesdits moyens de modulation et d'émission (103) sont adaptés pour générer le signal de synchronisation en émettant des bits générés par un générateur pseudo-aléatoire une graine dudit générateur est déterminée à partir de l'heure du système.

8. Système synchronisation selon l'une des revendications précédentes dans lequel lesdits moyens de modulation et d'émission (103) sont adaptés pour utiliser une modulation identique pour la modulation dudit signal de synchronisation et desdits données.

9. Système de synchronisation selon l'une des revendications précédentes dans lequel lesdits moyens de modulation et d'émission (103) sont adaptés pour l'utilisation d'une modulation à étalement de spectre.

## Patentansprüche

1. System zum Synchronisieren eines Geräts zum Zeigen auf eine Antenne eines Satellitenendgeräts oder einer Bodenstation auf einen Satelliten, der ein Satellitensynchronisationssignal in einem Satz von zusammenhängenden Zeitintervallen sendet, wobei das Synchronisationssystem Folgendes umfasst:
- erste Mittel (101) zum Auswählen von wenigstens zwei aufeinanderfolgenden Zeitintervallen, die zu dem Satz gehören;
- zweite Mittel (102) zum Auswählen von wenigstens zwei getrennten Sendefrequenzen, wobei jede Sendefrequenz mit einem der gewählten Zeitintervalle assoziiert ist,
wobei das Synchronisationssystem **dadurch gekennzeichnet ist, dass** es ferner Folgendes umfasst:
- Mittel (103) zum Modulieren des Synchronisationssignals in den gewählten Zeitintervallen mittels der Sendefrequenz, die jeweils mit dem Zeitintervall assoziiert ist, wobei die Modulationsmittel in einer Bodenstation integriert sind;
- Mittel (104) zum Demodulieren des empfangenen Synchronisationssignals, wobei die Demodulationsmittel in einem Satellitenendgerät integriert sind.

2. Synchronisationssystem nach Anspruch 1, wobei die ersten Auswahlmittel (101) ferner zum Wählen von wenigstens zwei aufeinanderfolgenden Zeitintervallen ausgelegt sind, die zweiten Auswahlmittel (102) zum Wählen von zwei getrennten Sendefrequenzen ausgelegt sind, wobei jede Sendefrequenz mit einem der aufeinanderfolgenden Zeitintervalle assoziiert ist, und die Modulationsmittel (103) zum Senden des Synchronisationssignals in den aufeinanderfolgenden Zeitintervallen und mit Hilfe der beiden mit den aufeinanderfolgenden Zeitintervallen assoziierten Sendefrequenzen ausgelegt sind.

3. Synchronisationssystem nach Anspruch 1 oder 2, wobei die Modulationsmittel (103) ferner zum Modulieren von Daten in wenigstens einem nicht von den ersten Auswahlmitteln (101) gewählten Zeitintervall und/oder mit Hilfe einer nicht von den zweiten Auswahlmitteln (102) gewählten Frequenz ausgelegt sind.

4. Synchronisationssystem nach einem der vorherigen Ansprüche, bei dem die Modulationsmittel in wenigstens einem Satelliten integriert sind.

5. Synchronisationssystem nach einem der vorherigen Ansprüche, bei dem das Satellitenendgerät und/oder der Satellit und/oder die Bodenstation ferner grobe zeitliche Synchronisationsmittel umfassen.

6. Synchronisationssystem nach einem der vorherigen Ansprüche, das Geräte zum Bestimmen des Signal-Rausch-Verhältnisses von wenigstens einem der Zeitintervalle umfasst,
wobei die ersten Auswahlmittel (101) ferner zum Wählen der Zeitintervalle ausgelegt sind, deren Signal-Rausch-Verhältnis eine Schwelle übersteigt.

7. Synchronisationssystem nach einem der vorherigen Ansprüche, bei dem die Modulations- und Sendemittel (103) zum Erzeugen des Synchronisationssignals durch Senden von von einem Pseudozufallsgenerator erzeugten Bits ausgelegt sind, wobei ein Seed des Generators auf der Basis der Zeit des Systems bestimmt wird.

8. Synchronisationssystem nach einem der vorherigen Ansprüche, bei dem die Modulations- und Sendemittel (103) zum Nutzen einer identischen Modulation für die Modulation des Synchronisationssignals und der Daten ausgelegt ist.

9. Synchronisationssystem nach einem der vorherigen Ansprüche, bei dem die Modulations- und Sendemittel (103) zum Nutzen einer Spreizspektrummodulation ausgelegt sind.

## Claims

1. A system for synchronising a device for pointing an antenna of a satellite terminal or of a ground station towards a satellite transmitting a satellite synchronisation signal in a set of contiguous time intervals, the synchronisation system comprising:
- first means (101) for selecting at least two consecutive time intervals belonging to said set;
- second means (102) for selecting at least two distinct transmission frequencies, each transmission frequency being associated with one of said selected time intervals,
the synchronisation system being **characterised in that** it further comprises:
- means (103) for modulating said synchronisation signal in said selected time intervals using the transmission frequency respectively associated with said time interval, said modulation means being integrated in a ground station;
- means (104) for demodulating the received synchronisation signal, said demodulation means being integrated in a satellite terminal.

2. The synchronisation system according to claim 1, wherein said first selection means (101) are further adapted to select at least two consecutive time intervals, said second selection means (102) are adapted to select two distinct transmission frequencies, each transmission frequency being associated with one of said consecutive time intervals, and said modulation means (103) are adapted to transmit said synchronisation signal in said consecutive time intervals and by using the two transmission frequencies associated with said consecutive time intervals.

3. The synchronisation system according to claim 1 or 2, wherein said modulation means (103) are further adapted to modulate data in at least one time interval not selected by said first selection means (101) and/or by using a frequency not selected by said second selection means (102).

4. The synchronisation system according to any one of the preceding claims, wherein said modulation means are integrated in at least one satellite.

5. The synchronisation system according to any one of the preceding claims, wherein said satellite terminal and/or said satellite and/or said ground station further comprise coarse time synchronisation means.

6. The synchronisation system according to any one of the preceding claims, comprising devices for determining the signal-to-noise ratio of at least one of said time intervals,
furthermore, said first selection means (101) are adapted to select the time intervals for which the signal-to-noise ratio exceeds a threshold.

7. The synchronisation system according to any one of the preceding claims, wherein said modulation and transmission means (103) are adapted to generate the synchronisation signal by transmitting bits generated by a pseudo-random generator, a seed of said generator being determined on the basis of the time of the system.

8. The synchronisation system according to any one of the preceding claims, wherein said modulation and transmission means (103) are adapted to use an identical modulation for modulating said synchronisation signal and said data.

9. The synchronisation system according to any one of the preceding claims, wherein said modulation and transmission means (103) are adapted to use spread-spectrum modulation.
